# FASCICULE DE BREVET EUROPEEN

(11) **EP 2 024 166 B1**
(45) Date de publication et mention de la délivrance du brevet: **20.10.2010**
(21) Numéro de dépôt: 07735907.3
(22) Date de dépôt: 15.05.2007
(51) Int. Cl.: B29C 65/02, B65D 35/10

(54) **PROCEDE ET DISPOSITIF POUR L'ASSEMBLAGE DE COMPOSANTS DE TUBES D'EMBALLAGE**
VERFAHREN UND VORRICHTUNG ZUM ZUSAMMENFÜGEN VON KOMPONENTEN VON VERPACKUNGSSCHLÄUCHEN
METHOD AND DEVICE FOR ASSEMBLING COMPONENTS OF PACKAGING TUBES

(30) Priorité: 20.05.2006 EP 06114292
(43) Date de publication de la demande: 18.02.2009
(73) Titulaire: Aisapack Holding SA, 1896 Vouvry (CH)
(72) Inventeur: FAVRE, Dominique, 1896 Vouvry (CH); KELLER, Gerhard, 1896 Vouvry (CH)
(74) Mandataire: Grosfillier, Philippe
(86) Numéro de dépôt international: PCT/IB2007/051837
(87) Numéro de publication internationale: WO 2007/135621

(56) Documents cités:
- CH-A- 348 544
- DE-A1- 3 236 819
- US-A- 2 584 095

## Description

L'invention se situe dans le domaine de la fabrication d'emballages tubulaires souples en matière plastique.

Elle concerne plus particulière la fixation d'un composant de tube semi-rigide, tel que fond, sur la paroi interne d'un élément tubulaire.

### Etat de la technique

Il existe des emballages en matière plastique constitués d'une jupe souple fabriquée à partir d'un film enroulé qui comporte une soudure longitudinale.

Un fond semi-rigide de section légèrement inférieure à la section de la jupe est fixé à celle-ci, au niveau de sa paroi interne.

Un exemple de procédé classique de fabrication est décrit ci-dessous :
a) Déroulement et calibrage par coupe des bords du film (rouleaux) pour la formation de jupes souples.
b) Mise en forme du film autour d'un mandrin tubulaire et soudure longitudinale.
c) Découpe de tube formé et soudé en des jupes de longueur correspondante à la décoration (print) de l'emballage.
d) Transfert des jupes dans une première tourelle pour l'opération d'assemblage et de soudage d'un goulot sur la jupe sur des stations successivès.
e) Décharge du produit semi-fini de la première tourelle et transfert dans une deuxième tourelle pour l'opération d'assemblage et de soudage du fond sur l'extrémité libre de la jupe sur des stations successives. Une rotation de 180° du produit semi-fini est intégrée dans le transfert et se fait simultanément.
f) Déchargement du produit fini.

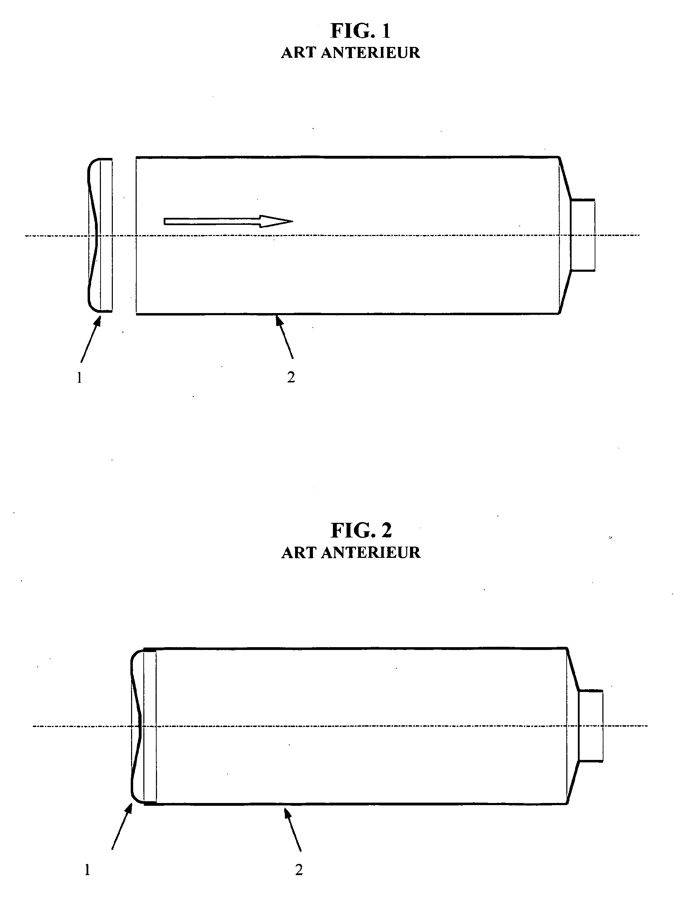

Le fond **1** avec une géométrie comme illustrée dans la Fig.1 doit être introduit dans un emballage tubulaire semi-fini **2** (jupe déjà soudée sur un goulot) afin d'être soudé à l'extrémité ouverte de ce dernier.

Sur sa zone de recouvrement avec la jupe **2** , la périphérie du fond **1** doit être de forme identique à la forme de la paroi interne de la jupe **2**, ceci afin d'éviter des fentes ou des volumes morts entre le fond **1** et la jupe **2**. De telles espaces étant très difficiles à rincer lors du remplissage aseptique.

Dans le même souci de minimiser les aspérités, le diamètre extérieur du fond est très légèrement inférieur au diamètre intérieur de la jupe. Cette différence est p.ex. de l'ordre de 0.1 mm, ce qui permet de garantir une bonne tenue géométrique (pas de plis) et une bonne résistance mécanique de la soudure thermique.

Comme on peut le constater sur la figure 1, lors de son déplacement pour être fixé à la jupe **2**, le fond **1** se situe toujours dans un plan perpendiculaire à l'axe principal de la jupe **2**.

Le risque d'accrochage entre le fond **1** et la jupe **2** est très élevé, surtout à cause du fait que cette opération se fait sur une machine automatique et l'alignement des fonds **1** et des jupes **2** n'est pas toujours parfaitement garanti.

Un autre risque lié à l'utilisation d'une machine provient du fait que lors des diverses opérations d'assemblage et de soudage pour produire l'emballage fini, les jupes **2** avec goulot sont logées dans des fourreaux de transport. Pour exécuter la soudure du fond **1** sur l'extrémité libre de la jupe **2**, cette dernière doit dépasser le fourreau d'une distance suffisante pour accéder avec la tête de soudage. De ce fait, la jupe **2** étant en matière plastique relativement fin a tendance à se déformer, p.ex. de s'ovaliser, ce qui peut empêcher l'introduction du fond **1** à l'intérieur de la jupe **2**.

Il existe donc un besoin de remédier aux problèmes précités

DE 32 36819 montre un procédé et un dispositif pour introduire un piston mobile à l'intérieur d'une jupe souple.

### Exposé général de l'invention

Dans l'invention, la solution des problèmes précités consiste en un procédé d'assemblage de composants de tubes en matière plastique comprenant la fixation d'un composant de tube semi-rigide, tel que fond, sur la paroi interne d'une jupe souple, lors de son introduction à l'intérieur de la jupe, ledit composant semi-rigide se situant dans un plan oblique par rapport à l'axe principal de la jupe et une fois complètement introduit à l'intérieur de celle-ci, on le redresse de manière à ce qu'il se situe dans un plan perpendiculaire à l'axe principal de la jupe puis on le ramène à l'endroit où il doit être fixé à la jupe.

Le procédé selon l'invention peut être utilisé pour fixer des composant de tube semi-rigides de formes variées, p.ex. circulaire, ovale ou polygonale.

Le composant de tube semi-rigide peut être un fond, une pièce intermédiaire destinée à être fixée à l'intérieur d'un tube, entre le fond et la partie supérieure ou une pièce supérieure destinée à être fixée dans la partie supérieure du tube.

On notera ici que le procédé selon l'invention peut également utilisé pour l'introduction successive d'un fond, d'une pièce intermédiaire et d'une pièce supérieure ou selon un ordre inverse.

L'invention se rapporte également à un dispositif pour la mise en oeuvre du procédé tel que défini précédemment. Le dispositif selon l'invention comprend des moyens adaptés pour introduire le composant semi-rigide selon un plan oblique par rapport à l'axe principal de la jupe, des moyens pour redresser le composant semi-rigjde selon un plan perpendiculaire par rapport à l'axe principal de la jupe et se caractérise par le fait qu'il comprend des moyens pour ramener le composant semi-rigide à l'endroit où il doit être fixé à la jupe.

N'importe quel type de systèmes permettant d'assurer les opérations décrites plus haut peut être utilisé dans le cadre de la présente invention.

De même, les moyens pour l'introduction, le redressement ou pour ramener le composant semi-rigide, p.ex. des tiges munies d'organes de saisie, peuvent être disposés indifféremment à l'extérieur ou à l'intérieur de la jupe.

Il convient de relever que l'invention peut s'appliquer à n'importe quel type de jupe, en particulier à des jupes obtenues à partir d'un laminé enroulé, par extrusion ou par injection. Elle s'applique également à des jupes en structure plastique avec une ou plusieurs couches de carton obtenue(s) par une soudure longitudinale ou spiralée.

### Exposé détaillé de l'invention

L'invention est décrite plus en détail ci-après au moyen d'exemples illustrés par les figures suivantes :
La Fig.1 illustre la position (à plat, non inclinée) du fond avant l'introduction dans la jupe, conformément à un procédé de l'art antérieur.
La Fig.2 représente le même procédé que celui de la figure 1 mais avec le fond disposé dans le tube avant la soudure.
La Fig.3 illustre la position du fond incliné (oblique) avant l'introduction dans la jupe, conformément au procédé selon l'invention.
La Fig.4 illustre la position du fond incliné (oblique) complètement pénétrée dans la jupe.
La Fig.5 illustre la position du fond incliné (oblique) complètement pénétrée dans la jupe et redressé.
La Fig.6 illustre la position du fond redressé et reculé pour être souder à la jupe.

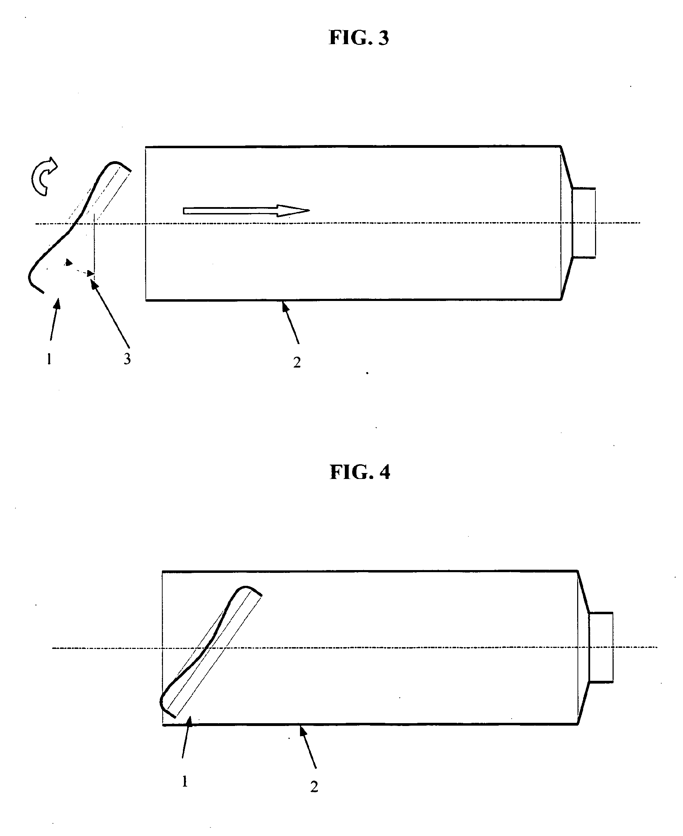

L'introduction oblique du composant semi-rigide **1** dans la jupe **2** (figures 3 et 4) réduit considérablement le risque d'accrochage de détérioration des composants consécutivement à leur mise en contact.

De préférence, le procédé et le dispositif selon l'invention sont conçus pour une introduction oblique du composant semi-rigide **1** qui se situe dans un plan dont l'inclinaison **3** varie entre 15 ° et 60 ° par rapport à l'axe principal de la jupe.

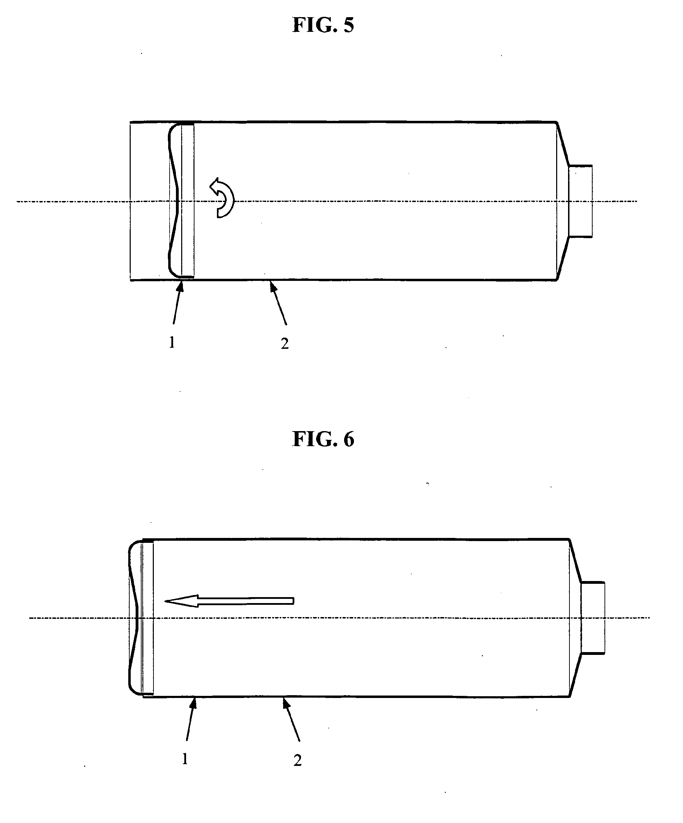

Le redressement en position verticale du composant semi-rigide **1** s'effectue à l'intérieur de la jupe **2** (figure 5).

Enfin, le composant semi-rigide 1 est déplacé de manière à atteindre sa position définitive (figure 6) où il est fixé, p.ex. par soudage, à la jupe **2**. Plus précisément, la surface externe du composant semi-rigide **1** est fixée sur la paroi interne de la jupe **2**.

Il va sans dire que l'invention ne se limite pas aux exemples illustrés discutés précédemment mais est définie par les revendications suivantes.

## Revendications

1. Procédé d'assemblage de composants de tubes en matière plastique comprenant la fixation d'un composant de tube semi-rigide (1), tel que fond, sur la paroi interne d'une jupe souple (2),
lors de son introduction à l'intérieur de la jupe (2), ledit composant semi-rigide (1) se situant dans un plan oblique par rapport à l'axe principal de la jupe (2) et une fois complètement introduit à l'intérieur de celle-ci, on le redresse de manière à ce qu'il se situe dans un plan perpendiculaire à l'axe principal de la jupe (2) puis on le ramène à l'endroit où il doit être fixé à la jupe (2).

2. Procédé selon la revendication 1 utilisant un composant de tube semi-rigide (1) de forme circulaire.

3. Procédé selon la revendication 1 utilisant un composant de tube semi-rigide (1) de forme ovale.

4. Procédé selon la revendication 1 utilisant un composant de tube semi-rigide (1) de forme polygonale.

5. Procédé selon l'une quelconque des revendications précédentes **caractérisé en ce que** ledit composant semi-rigide (1) est un fond de tube.

6. Procédé selon l'une quelconque des revendications précédentes **caractérisé en ce que** ledit composant semi-rigide (1) est un composant intermédiaire destiné à être fixé à l'intérieur d'un tube, entre le fond et la partie supérieure.

7. Procédé selon l'une quelconque des revendications précédentes **caractérisé en ce que** ledit composant semi-rigide (1) est un composant supérieur destiné à être fixé dans la partie supérieure du tube.

8. Dispositif pour la mise en oeuvre du procédé tel que défini dans l'une quelconque des revendications précédentes comprenant des moyens adaptés pour introduire ledit composant semi-rigide (1) selon un plan oblique par rapport à l'axe principal de la jupe (2), des moyens pour redresser ledit composant semi-rigide (1) selon un plan perpendiculaire par rapport à l'axe principal de la jupe (2), **caractérisé par le fait qu'**il comprend des moyens pour ramener le composant semi-rigide (1) à l'endroit où il doit être fixé à la jupe (2).

## Claims

1. Method for assembling components of plastic tubes comprising the attachment of a semi-rigid tube component (1), such as a bottom, to the internal wall of a flexible skirt (2), the said semi-rigid component (1), during its insertion into the skirt (2), being situated in a plane that is oblique relative to the main axis of the skirt (2) and, once completely inserted into the latter, being straightened up so that it is situated in a plane that is perpendicular to the main axis of the skirt (2) and is then brought back to the location in which it is to be attached to the skirt (2).

2. Method according to Claim 1 using a semi-rigid tube component (1) of circular shape.

3. Method according to Claim 1 using a semi-rigid tube component (1) of oval shape.

4. Method according to Claim 1 using a semi-rigid tube component (1) of polygonal shape.

5. Method according to any one of the preceding claims, **characterized in that** the said semi-rigid component (1) is a tube bottom.

6. Method according to any one of the preceding claims, **characterized in that** the said semi-rigid component (1) is an intermediate component designed to be attached inside a tube, between the bottom and the top portion.

7. Method according to any one of the preceding claims, **characterized in that** the said semi-rigid component (1) is a top component designed to be attached in the top portion of the tube.

8. Device for applying the method as defined in any one of the preceding claims, comprising means suitable for inserting the said semi-rigid component (1) in a plane that is oblique relative to the main axis of the skirt (2), means for straightening up the said semi-rigid component (1) in a plane that is perpendicular relative to the main axis of the skirt (2), **characterized in that** it comprises means for bringing the semi-rigid component (1) back to the location in which it is to be attached to the skirt (2).

## Patentansprüche

1. Verfahren zum Zusammenbau von Tubenbauteilen aus Kunststoff, das die Befestigung eines halbsteifen Tubenbauteils (1), wie des Bodens, an der Innenwand einer flexiblen Schürze (2) enthält, wobei das halbsteife Bauteil (1) sich bei seiner Einführung ins Innere der Schürze (2) in einer geneigten Ebene bezüglich der Hauptachse der Schürze (2) befindet, und wenn es vollständig in deren Inneres eingeführt ist, aufgerichtet wird, damit es sich in einer Ebene lotrecht zur Hauptachse der Schürze (2) befindet, und dann an die Stelle zurückgebracht wird, wo es an der Schürze (2) befestigt werden soll.

2. Verfahren nach Anspruch 1, das ein kreisförmiges halbsteifes Tubenbauteil (1) verwendet.

3. Verfahren nach Anspruch 1, das ein ovales halbsteifes Tubenbauteil (1) verwendet.

4. Verfahren nach Anspruch 1, das ein polygonales halbsteifes Tubenbauteil (1) verwendet.

5. Verfahren nach einem der vorhergehenden Ansprüche, **dadurch gekennzeichnet, dass** das halbsteife Bauteil (1) ein Tubenboden ist.

6. Verfahren nach einem der vorhergehenden Ansprüche, **dadurch gekennzeichnet, dass** das halbsteife Bauteil (1) ein Zwischenbauteil ist, das dazu bestimmt ist, im Inneren einer Tube zwischen dem Boden und dem oberen Bereich befestigt zu werden.

7. Verfahren nach einem der vorhergehenden Ansprüche, **dadurch gekennzeichnet, dass** das halbsteife Bauteil (1) ein oberes Bauteil ist, das dazu bestimmt ist, im oberen Bereich der Tube befestigt zu werden.

8. Vorrichtung zur Durchführung des Verfahrens, wie es in einem der vorhergehenden Ansprüche definiert ist, die Einrichtungen, die geeignet sind, um das halbsteife Bauteil (1) gemäß einer geneigten Ebene bezüglich der Hauptachse der Schürze (2) einzuführen, und Einrichtungen enthält, um das halbsteife Bauteil (1) gemäß einer lotrechten Ebene bezüglich der Hauptachse der Schürze (2) aufzurichten, **dadurch gekennzeichnet, dass** sie Einrichtungen enthält, um das halbsteife Bauteil (1) an die Stelle zurückzubringen, wo es an der Schürze (2) befestigt werden soll.
